# EUROPÄISCHE PATENTSCHRIFT

(11) **EP 2 965 612 B1**
(45) Veröffentlichungstag und Bekanntmachung des Hinweises auf die Patenterteilung: **18.08.2021**
(21) Anmeldenummer: 15172072.9
(22) Anmeldetag: 15.06.2015
(51) Int. Cl.: A01D 61/00

(54) **SCHRÄGFÖRDERERZUSAMMENBAU FÜR EINEN MÄHDRESCHER**
FEEDER CONVEYOR ASSEMBLY FOR A COMBINE HARVESTER
ASSEMBLAGE DE CONVOYEUR-ÉLÉVATEUR POUR UNE MOISSONNEUSE-BATTEUSE

(30) Priorität: 10.07.2014 DE 102014213445
(43) Veröffentlichungstag der Anmeldung: 13.01.2016
(73) Patentinhaber: Deere & Company, Moline, IL 61265 (US)
(72) Erfinder: Veit, Philipp, 06618 Molauer Land (DE); Fuchs, Volker, 54439 Saarburg (DE); Rittershofer, Martin, 67663 Kaiserslautern (DE)
(74) Vertreter: Holst, Sönke

(56) Entgegenhaltungen:
- EP-A1- 1 040 750
- EP-A1- 1 733 607
- DE-A1-102009 036 104
- DE-B3-102011 017 426
- US-A- 2 858 012
- US-A- 4 369 617
- Anonym: "Wahl der Lageranordnung", Universität Kaiserslautern , 26. Juni 2011 (2011-06-26), Seiten 4-9, XP002751125, Gefunden im Internet: URL:https://web.archive.org/web/2011062608 3518/http://www.imme2000.de/dokumente/Fach spezifischerTeil/Pruefungsvorbereitung/Mai _2004/Radialwellendichtring_e.pdf [gefunden am 2015-11-19]
- Anonmous: "Lagerungskonzepte", Wikipedia, the free encyclopedia , 12. März 2013 (2013-03-12), Seite 3pp, XP002751146, Gefunden im Internet: URL:http://web.archive.org/web/20130312121 930/http://de.wikipedia.org/wiki/Lagerungs konzepte [gefunden am 2015-11-19]

## Beschreibung

Die Erfindung betrifft einen Schrägfördererzusammenbau für einen Mähdrescher, umfassend:
ein Gehäuse,
eine im Gehäuse angeordnete, antreibbare Schrägfördererwelle, an der Mitnehmerelemente zur Drehmomentübertragung auf ein die Schrägfördererwelle teilweise umrundendes, endloses Zugmittel mit daran befestigten Förderleisten angebracht sind,
eine im Gehäuse angeordnete Umlenkwalze, um die das endlose Zugmittel umläuft,
eine an einem ersten Ende der Schrägfördererwelle befestigte, erste Lageranordnung, die über erste Halterungsmittel mit dem benachbarten Bereich des Gehäuses verbunden ist,
und eine an einem zweiten Ende der Schrägfördererwelle befestigte, zweite Lageranordnung, die über zweite Halterungsmittel mit dem benachbarten Bereich des Gehäuses verbunden ist.

### Stand der Technik

Mähdrescher dienen zur Ernte der Früchte von landwirtschaftlich angebauten Pflanzen, die mittels eines Erntevorsatzes aufgenommen und durch einen Schrägfördererzusammenbau in den eigentlichen Mähdrescher hinein gefördert werden. Dort werden die Pflanzen gedroschen und die gewonnenen Nutzteile gereinigt. Schrägfördererzusammenbau umfassen ein Gehäuse, in dem ein Endlosförderer mit mehreren seitlich nebeneinander angeordneten Zugmitteln um eine untere Umlenkwalze und eine obere Schrägfördererwelle umläuft und das Material unterschlächtig nach oben in den Mähdrescher hinein fördert. Der Endlosförderer umfasst Förderleisten, die an jeweils zwei Zugmitteln befestigt sind, um das Material zu fördern. Hierzu wird auf die Offenbarung der EP 1 733 607 A1 verwiesen.

Gebräuchliche Schrägfördererzusammenbauten sind mit als Zugmittel dienenden Ketten ausgestattet, die mit Ritzeln zusammenwirken, welche an der angetriebenen, oberen Schrägfördererwelle angeschweißt oder anderweitig (insbesondere lösbar) befestigt sein können. Aufgrund der relativ großen, zu übertragenden Drehmomente wurden als obere Schrägfördererwelle bereits Schweißzusammenbauten mit Hohlwellen verwendet, an denen auf der (in Fahrtrichtung rechts liegenden) Antriebsseite ein Wellenstummel aus Vollmaterial angeschweißt ist (Teilenummer AZ49359 für Mähdrescher Modell Nr. 2054, 2056, 2058 der Anmelderin), während auf der anderen Seite ein Flansch eines endseitigen Achsstummels an die Schrägfördererwelle angeschraubt wird und die Ritzel zum Antrieb der als Zugmittel dienenden Förderketten an der Hohlwelle angeschweißt sind. Die Lagerung der Schrägfördererwellen im Schrägförderergehäuse erfolgt dort an beiden Enden durch Kugellageranordnungen, die von außen her auf den Wellen- und Achsstummel aufgeschoben sind. Auf die Kugellageranordnung ist je ein Lagergehäuse aufgesetzt, das seinerseits am Gehäuse des Schrägfördererzusammenbaus angeschraubt ist. Auf der Antriebsseite der Schrägfördererwelle ist zum Antrieb ein Ritzel oder eine Riemenscheibe befestigt, das oder die mittels einer Kette oder eines Riemens mit einem Antriebsstrang des Mähdreschers verbunden wird.

Die zweiteilige Konstruktion der Schrägfördererwelle mit dem angeschraubten Achsstummel wird verwendet, um den Einbau der Schrägfördererwelle in das Schrägförderergehäuse zu ermöglichen, indem zunächst die eigentliche Schrägfördererwelle in das Gehäuse eingesetzt wird, sodass der Wellenstummel durch das Gehäuse nach außen ragt. Dann wird der Achsstummel eingesetzt und an der Schrägfördererwelle angeschraubt, woraufhin von der Außenseite des Gehäuses her die Kugellageranordnungen auf den Achs- und Wellenstummel geschoben und dort axial unverschieblich befestigt und schließlich die Lagergehäuse am Gehäuse angeschraubt werden. Diese zweiteilige Konstruktion der Schrägfördererwelle ist relativ aufwändig.

So genannte Loslager, bei denen eine Lagerung eines rotierenden Elements feststeht und eine zweite Lagerung in axialer Richtung verschiebbar sind, sind an sich bekannt, um Abstandsunterschiede zwischen den Lagersitzen, bedingt durch Fertigungstoleranzen, Erwärmung etc. auszugleichen (B. Sauer et al., "Wahl der Lageranordnung", Universität Kaiserslautern, vom 26.6.2011, abgespeichert am 26.06.2011 unter https://archive.org/web/20110626083518/http://imme2000.de/dokumente/FachspezifischerTeil/Pruefungs vorbereitung/Mai 2004/Radialwellendichtring e.pdf, Seite 4).

### Aufgabe

Die vorliegende Erfindung hat sich zur Aufgabe gesetzt, einen verbesserten Schrägfördererzusammenbau bereitzustellen, welche die erwähnten Nachteile nicht oder in vermindertem Ausmaße aufweist.

### Erfindung

Die vorliegende Erfindung wird durch die Ansprüche definiert.

Ein Schrägfördererzusammenbau für einen Mähdrescher umfasst ein Gehäuse, eine im Gehäuse angeordnete, antreibbare Schrägfördererwelle, an der Mitnehmerelemente zur Drehmomentübertragung auf ein die Schrägfördererwelle teilweise umrundendes, endloses Zugmittel mit daran befestigten Förderleisten angebracht sind, eine im Gehäuse angeordnete Umlenkwalze, um die das endlose Zugmittel umläuft, eine an einem ersten Ende der Schrägfördererwelle befestigte, erste Lageranordnung, die über erste Halterungsmittel mit dem benachbarten Bereich des Gehäuses verbunden ist, und eine an einem zweiten Ende der Schrägfördererwelle befestigte, zweite Lageranordnung, die über zweite Halterungsmittel mit dem benachbarten Bereich des Gehäuses verbunden ist. Die erste Lageranordnung ist als axial verschiebbares Loslager ausgeführt.

Auf diese Weise wird die Montage der Schrägfördererwelle vereinfacht, denn die als Loslager ausgeführte erste Lageranordnung kann auf der Schrägfördererwelle axial verschoben werden, sodass sie beim Einsetzen der Schrägfördererwelle in eine Position geschoben werden kann, in welcher sie und ihre Halterungsmittel den Einbau der Schrägfördererwelle in das Gehäuse nicht behindern. Die erste Lageranordnung kann dann später in ihre endgültige Lage verbracht werden. Somit kann (muss aber nicht notwendigerweise) eine einteilige Schrägfördererwelle Verwendung finden, die nicht erst nach dem Einsetzen in das Gehäuse des Schrägfördererzusammenbaus zusammenzubauen und stabiler als eine Schraubkonstruktion ist.

Die zweite Lageranordnung kann insbesondere als Festlager ausgeführt sein, obwohl auch sie ein Loslager sein könnte.

Die Halterungsmittel umfassen vorzugsweise jeweils zwei Klemmelemente, die die Lageranordnung zwischen sich einklemmen.

Die Lageranordnungen sind auf der Innenseite des Gehäuses angeordnet. Bei einer bevorzugten Ausführungsform tragen die Halterungsmittel zusätzlich ein topfförmiges Abdichtungselement, das vom Gehäuse nach innen ragt und mit einem zylindrischen Abdichtungsring zusammenwirkt, der an einer Halterung der Mitnehmerelemente angebracht ist. Das Abdichtungselement und der Abdichtungsring dienen insbesondere als Wickelschutz und verhindern, dass sich Ernteguthalme um die Schrägfördererwelle wickeln.

Obwohl es denkbar wäre, die Mitnehmerelemente als Kettenritzel zum Antrieb eines als Kette ausgeführten Zugmittels auszuführen, wird insbesondere vorgeschlagen, dass die Mitnehmerelemente zylindrische Stifte sind, die mit innenseitig an den aus in sich flexiblem Material bestehenden Zugmitteln (vgl. DE 10 2009 036 104 A1) angebrachten Nocken zusammenwirken, die an Halterungen angeschweißt sind, die ihrerseits an der Schrägfördererwelle angeschweißt sind. Diese Schweißverbindungen, die im Übrigen auch bei einer Schrägfördererwelle ohne Loslager verwendet werden können, ermöglichen eine Übertragung eines hinreichend großen Drehmoments auf das Zugmittel.

Vorzugsweise besteht die Schrägfördererwelle aus einer mittigen Hohlwelle und endseitig darin eingesetzten und daran angeschweißten Stummeln aus Vollmaterial, wobei die Lageranordnungen an den Stummeln befestigt sind.

Einer der Stummel kann eine Öffnung im Gehäuse durchdringen und außerhalb des Gehäuses mit einem Antrieb verbunden sein.

Das Loslager kann eine in die erste Lageranordnung einsetzbare Schraube umfassen, die in eine axiale Nut der Schrägfördererwelle eingreift.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers mit einem Schrägfördererzusammenbau,
- Fig. 2: eine perspektivische Ansicht einer Schrägfördererwelle,
- Fig. 3: einen vertikalen Schnitt durch den Schrägfördererzusammenbau im Bereich der ersten, als Loslager ausgeführten Lageranordnung, und
- Fig. 4: einen vertikalen Schnitt durch den Schrägfördererzusammenbau im Bereich der zweiten Lageranordnung.

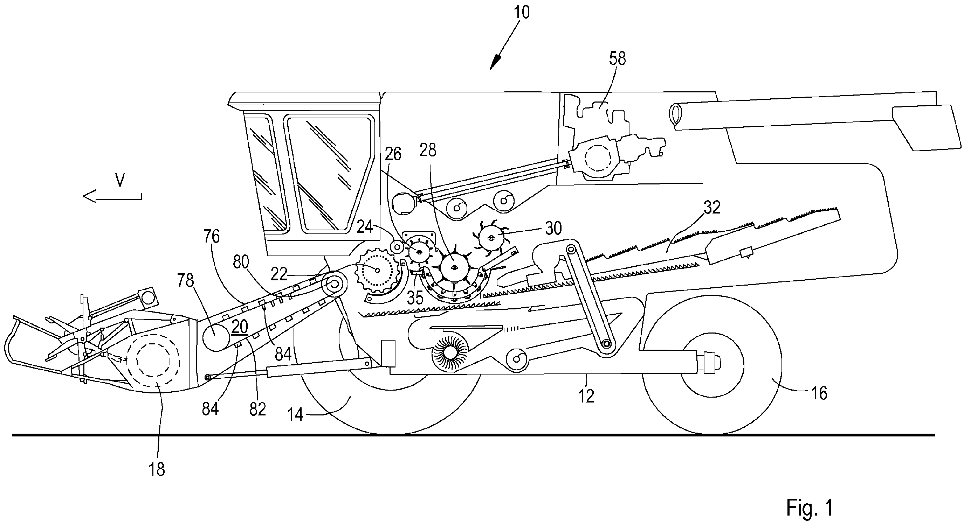

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Anstelle des gezeigten Mehrtrommeldreschwerks kann eine beliebige, andere Dresch- und Trenneinrichtung Verwendung finden.

Der Schrägfördererzusammenbau 20 umfasst ein Gehäuse 76, an dessen unterem, vorderen Ende eine untere Umlenkwalze 78 und an dessen oberem, hinteren Ende eine Schrägfördererwelle 80 angeordnet ist. Die Umlenkwalze 78 und die Schrägfördererwelle 80 erstrecken sich quer zur Vorwärtsrichtung und horizontal. Um die Umlenkwalze 78 und die Schrägfördererwelle 80 laufen Zugmittel 82 in Form von Riemen aus in sich flexiblem Material mit innenseitig angeordneten Nocken 84 um, von denen zwei, drei oder mehrere seitlich beabstandet voneinander angeordnet sind. Die Schrägfördererwelle 80 ist durch einen Antriebsstrang mit einem Verbrennungsmotor 58 verbunden, um sie im Erntebetrieb in Drehung zu versetzen. Zwischen zwei benachbarten Zugmitteln 82 erstrecken sich Förderleisten 84. Die Förderleisten 84 sind mit den Zugmitteln 82 lösbar verschraubt. Im Erntebetrieb arbeitet der Schrägfördererzusammenbau 20 unterschlächtig, d.h., das Erntegut wird unterhalb der Zugmittel 82 am Boden des Gehäuses 76 des Schrägfördererzusammenbaus 20 nach oben gezogen.

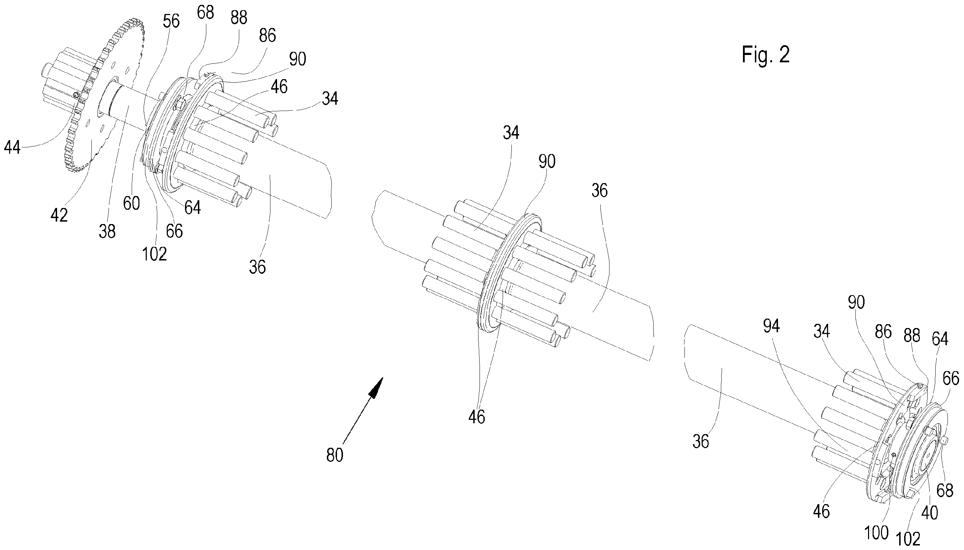

Die Zugmittel 82 entsprechen an sich den aus der DE 10 2009 036 104 A1 bekannten Nockenriemen. An den Zugmitteln 82 sind innenseitig Nocken 84 angebracht, die zum Übertragen des Antriebsmoments der angetriebenen Schrägfördererwelle 80 dienen. Die angetriebene Schrägfördererwelle 80 ist dazu mit kreiszylindrischen Mitnehmerelementen 34 ausgestattet, die jeweils in den Zwischenraum zwischen zwei benachbarten Nocken 84 eingreifen. Hierzu wird auf die Figur 2 verwiesen, in welcher die obere Schrägfördererwelle 80 in einer perspektivischen Ansicht gezeigt wird.

Die Schrägfördererwelle 80 setzt sich aus einer mittigen Hohlwelle 36 und endseitigen Stummeln 38, 40 aus Vollmaterial zusammen. Der in der Figur 2 links eingezeichnete Stummel 38 befindet sich im eingebauten Zustand an der in Vorwärtsrichtung V rechten Seite des Gehäuses 76 des Schrägfördererzusammenbaus 20 und dient zur Übertragung des Antriebsmoments vom Verbrennungsmotor 58 über ein Kettenritzel 42, das auch als Riemenscheibe ausgeführt sein könnte, und eine Überlastkupplung 44. Der in der Figur 2 rechts eingezeichnete Stummel 40 dient zur Lagerung der Schrägfördererwelle 80 im Gehäuse 76.

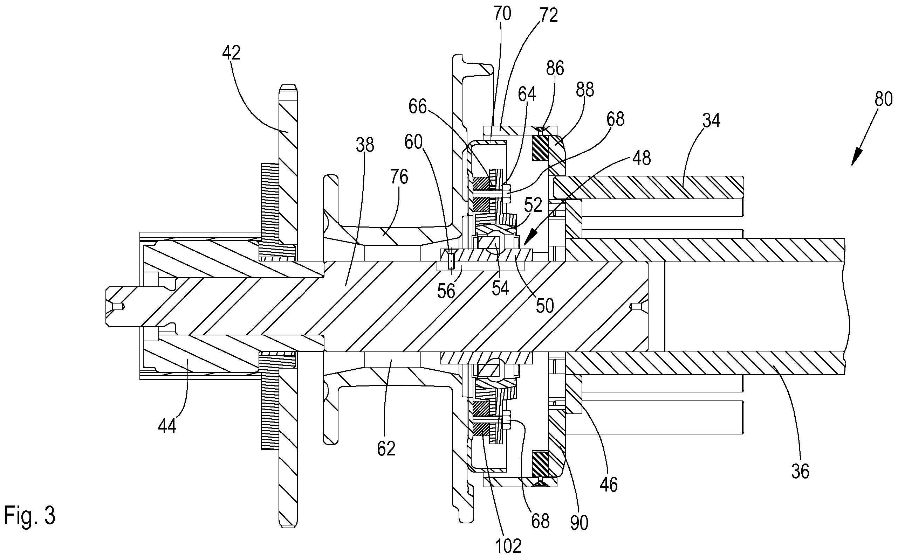

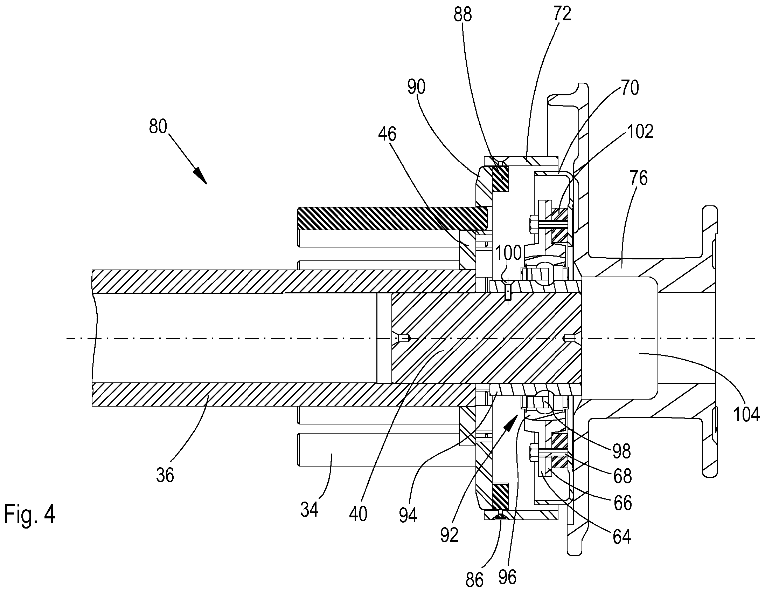

Anhand der Figuren 3 und 4 ist erkennbar, dass die Stummel 38 und 40 jeweils über eine Länge in die Hohlwelle 36 eindringen. Die Stummel 38, 40 sind an den äußeren Enden der Hohlwelle 36 mit letzterer verschweißt. Auch sind ringförmige Halterungen 46 zur Anbringung der Mitnehmerelemente 34 an der Schrägfördererwelle 80 mit der Hohlwelle 36 und mit den Mitnehmerelementen 34 verschweißt. Die Halterungen 46 umrunden die Hohlwelle 36 tangential. Im mittleren Bereich der Schrägfördererwelle 80 sind aufgrund des dort zu übertragenden Drehmoments zwei Halterungen 46 aneinander direkt benachbart mit der Hohlwelle 36 und den Mitnehmerelementen 34 verschweißt. Anhand der Figur 2 erkennt man, dass der Schrägfördererzusammenbau 20 drei nebeneinander angeordnete Zugmittel 82 umfasst, die jeweils mit einem der drei nebeneinander angeordneten, aus Mitnehmerelementen 34 aufgebauten Antriebsrädern zusammenwirken.

Die Lagerung der Schrägfördererwelle 80 im Gehäuse 76 erfolgt auf der in Vorwärtsrichtung rechten Seite des Schrägfördererzusammenbaus 20 durch eine erste Lageranordnung 48, die sich aus einer inneren Lagerschale 50 und einer äußeren Lagerschale 52 zusammensetzt, welche durch Wälzlagerelemente 54 in Form von Kugeln drehbar auf der inneren Lagerschale 50 gelagert ist. Die innere Lagerschale 50 ist durch eine Schraube 60, die in eine axiale Nut 56 des Stummels 38 eingreift, in Umfangsrichtung am Stummel 38 (und somit an der Schrägfördererwelle 80) fixiert, aber in axialer Richtung entlang der Länge der Nut 56 verschiebbar. Die erste Lageranordnung 48 ist demnach ein so genanntes Loslager. Das Gehäuse 76 weist eine Öffnung 62 auf, durch die sich der Stummel 38 nach außen erstreckt. Im Bereich der Öffnung 62 ist das Gehäuse 76 mit einem U-förmigen Profil ausgestattet. Die Überlastkupplung 44 und das Ritzel 42 sind außerhalb des Gehäuses 76 angebracht.

Die Befestigung der ersten Lageranordnung 48 am Gehäuse 76 erfolgt durch zwei Klemmelemente 64, 66, die komplementär zur gewölbt geformten äußeren Oberfläche der äußeren Lagerschale 52 geformte, innere Abschnitte umfassen, welche somit die äußere Oberfläche der äußeren Lagerschale 52 zwischen sich in axialer Richtung einklemmen. Die Klemmelemente 64, 66 sind ihrerseits durch Schrauben 68, die sich durch Bohrungen in einem zwischen dem äußeren Klemmelement 66 und dem Gehäuse 76 angeordneten Abstandsring 102 erstrecken, am Gehäuse 76 fixiert. Die Klemmelemente 64, 66, die Schrauben 68 und der Abstandsring 102 dienen hier als erste Halterungsmittel zur Befestigung der ersten Lageranordnung 48 am benachbarten Bereich des Gehäuses 76. Die Schrauben 68 haltern gleichzeitig ein topfförmiges Abdichtungselement 70, das eine innere, parallel zur seitlichen Wand des Gehäuses 76 orientierte, zwischen dem Abstandsring 102 und dem Gehäuse 76 positionierte Wand und einen sich am äußeren Rand der Wand nach innen erstreckenden Ring umfasst. Letzterer wird mit einem relativ kleinen Spalt von einem äußeren, zylindrischen Abdichtungsring 72 umschlossen, welcher seinerseits über Schrauben 86, Halteblöcke 88 und Stützringe 90 mit der Halterung 46 verbunden ist, welche der ersten Lageranordnung 48 unmittelbar benachbart ist. Das Abdichtungselement 70 und der Abdichtungsring 72 verhindern, dass sich Ernteguthalme um die Schrägfördererwelle 80 wickeln und vermeiden auch das Eindringen von Verunreinigungen in die an der Innenseite des Gehäuses 76 angeordnete erste Lageranordnung 48.

Es wird nun auf die Figur 4 verwiesen. Die Lagerung der Schrägfördererwelle 80 im Gehäuse 76 erfolgt auf der in Vorwärtsrichtung linken Seite des Schrägfördererzusammenbaus 20 durch eine zweite Lageranordnung 92, die sich aus einer inneren Lagerschale 94 und einer äußeren Lagerschale 96 zusammensetzt, welche durch Wälzlagerelemente 98 in Form von Kugeln drehbar auf der inneren Lagerschale 94 gelagert ist. Die innere Lagerschale 94 ist durch eine Schraube 100, die in eine Bohrung des Stummels 40 eingreift, in Umfangsrichtung und in axialer Richtung am Stummel 40 (und somit an der Schrägfördererwelle 80) fixiert, d.h. in axialer Richtung entlang der Länge des Stummels 40 unverschiebbar. Die zweite Lageranordnung 92 ist demnach ein so genanntes Festlager. Das Gehäuse 76 weist dem Stummel 40 benachbart eine Vertiefung 104 auf, deren Durchmesser größer als der der inneren Lagerschale 94 ist. Im Bereich der Vertiefung 102 ist das Gehäuse 76 mit einem U-förmigen Profil ausgestattet.

Die Befestigung der zweiten Lageranordnung 94 am Gehäuse 76 erfolgt durch zwei Klemmelemente 64, 66, die komplementär zur gewölbt geformten äußeren Oberfläche der äußeren Lagerschale 96 geformte, innere Abschnitte umfassen, welche somit die äußere Oberfläche der äußeren Lagerschale 96 zwischen sich in axialer Richtung einklemmen. Die Klemmelemente 64, 66 sind ihrerseits durch Schrauben 68, die sich durch Bohrungen in einem zwischen dem äußeren Klemmelement 66 und dem Gehäuse 76 angeordneten Abstandsring 102 erstrecken, am Gehäuse 76 fixiert. Die Klemmelemente 64, 66, die Schrauben 68 und der Abstandsring 102 dienen hier als zweite Halterungsmittel zur Befestigung der zweiten Lageranordnung 92 am benachbarten Bereich des Gehäuses 76. Die Schrauben 68 haltern gleichzeitig ein topfförmiges Abdichtungselement 70, das eine innere, parallel zur seitlichen Wand des Gehäuses 76 orientierte, zwischen dem Abstandsring 102 und dem Gehäuse 76 positionierte Wand und einen sich am äußeren Rand der Wand nach innen erstreckenden Ring umfasst. Letzterer wird mit einem relativ kleinen Spalt von einem äußeren, zylindrischen Abdichtungsring 72 umschlossen, welcher seinerseits über Schrauben 86, Halteblöcke 88 und Stützringe 90 mit der Halterung 46 verbunden ist, welche der zweiten Lageranordnung 94 unmittelbar benachbart ist. Das Abdichtungselement 70 und der Abdichtungsring 72 verhindern, dass sich Ernteguthalme um die Schrägfördererwelle 80 wickeln und vermeiden auch das Eindringen von Verunreinigungen in die an der Innenseite des Gehäuses 76 angeordnete zweite Lageranordnung 94.

Die als Loslager ausgeführte erste Lageranordnung 48 ermöglicht es, das in Vorwärtsrichtung rechte (in Figur 3 links eingezeichnete) Ende der Schrägfördererwelle 80 bei der Montage weiter nach links in die Öffnung 62 des Gehäuses 76 einzuführen als in der Figur 3 gezeigt, bis die Schraube 60 am in der Figur 3 rechts eingezeichneten Ende der Nut 56 anliegt. Dann kann das andere, in Figur 4 gezeigte Ende der Schrägfördererwelle 80 in der Nähe der Vertiefung 104 positioniert werden. Schließlich werden die ersten und zweiten Halterungsmittel durch Anbringen der Schrauben 88 am Gehäuse 76 fixiert. Demnach ermöglicht die erste Lageranordnung 48 den einfachen Einbau einer als einteiliger Schweißzusammenbau realisierten Schrägfördererwelle 80, deren Stabilität zum Antrieb des flexiblen Zugmittels 82 benötigt wird.

## Patentansprüche

1. Schrägfördererzusammenbau (20) für einen Mähdrescher (10), umfassend:
ein Gehäuse (76),
eine im Gehäuse (76) angeordnete, antreibbare Schrägfördererwelle (80), an der Mitnehmerelemente (34) zur Drehmomentübertragung auf ein die Schrägfördererwelle (80) teilweise umrundendes, endloses Zugmittel (82) mit daran befestigten Förderleisten (84) angebracht sind,
eine im Gehäuse (76) angeordnete Umlenkwalze (78), um die das endlose Zugmittel (82) umläuft,
eine an einem ersten Ende der Schrägfördererwelle (80) befestigte, erste Lageranordnung (48), die über erste Halterungsmittel mit dem benachbarten Bereich des Gehäuses (76) verbunden ist,
und eine an einem zweiten Ende der Schrägfördererwelle (80) befestigte, zweite Lageranordnung (92), die über zweite Halterungsmittel mit dem benachbarten Bereich des Gehäuses (76) verbunden ist,
**dadurch gekennzeichnet, dass** die Lageranordnungen (48, 92) auf der Innenseite des Gehäuses (76) angeordnet sind und dass die erste Lageranordnung (48) als auf der Schrägfördererwelle (80) axial verschiebbares Loslager ausgeführt ist und derart ausgebildet ist, dass sie beim Einsetzen der Schrägfördererwelle (80) in das Gehäuse (76) in eine Position geschoben werden kann, in welcher sie und ihre Halterungsmittel den Einbau der Schrägfördererwelle (80) in das Gehäuse (76) nicht behindern, und anschließend in ihre endgültige Lage verbracht werden kann.

2. Schrägfördererzusammenbau (20) nach Anspruch 1, wobei die zweite Lageranordnung (92) als Festlager ausgeführt ist.

3. Schrägfördererzusammenbau (20) nach Anspruch 1 oder 2, wobei die Halterungsmittel jeweils zwei Klemmelemente (64, 66) umfassen, die die Lageranordnung (48) zwischen sich einklemmen.

4. Schrägfördererzusammenbau (20) nach einem der vorhergehenden Ansprüche, wobei die Halterungsmittel jeweils zusätzlich ein topfförmiges Abdichtungselement (70) tragen, das vom Gehäuse (76) nach innen ragt und mit einem zylindrischen Abdichtungsring (72) zusammenwirkt, der an einer Halterung (46) der Mitnehmerelemente (34) angebracht ist.

5. Schrägfördererzusammenbau (20) nach einem der vorhergehenden Ansprüche, wobei die Mitnehmerelemente (34) zylindrische Stifte sind, die mit innenseitig an den aus in sich flexiblem Material bestehenden Zugmitteln (82) angebrachten Nocken (84) zusammenwirken, die an Halterungen (46) angeschweißt sind, die ihrerseits an der Schrägfördererwelle (80) angeschweißt sind.

6. Schrägfördererzusammenbau (20) nach einem der vorhergehenden Ansprüche, wobei die Schrägfördererwelle (80) sich aus einer mittigen Hohlwelle (36) und endseitig darin eingesetzten und daran angeschweißten Stummeln (38, 40) aus Vollmaterial zusammensetzt und die Lageranordnungen (48, 92) an den Stummeln (38, 40) befestigt sind.

7. Schrägfördererzusammenbau (20) nach Anspruch 6, wobei einer der Stummel (38) eine Öffnung (62) im Gehäuse (76) durchdringt und außerhalb des Gehäuses (76) mit einem Antrieb verbunden ist.

8. Schrägfördererzusammenbau (20) nach einem der vorhergehenden Ansprüche, wobei das Loslager eine in die erste Lageranordnung (48) einsetzbare Schraube (60) umfasst, die in eine axiale Nut (56) der Schrägfördererwelle (80) eingreift.

9. Mähdrescher (10) mit einem Schrägfördererzusammenbau (20) nach einem der vorhergehenden Ansprüche.

## Claims

1. Feeder house assembly (20) for a combine harvester (10), comprising:
a housing (76),
a drivable feeder house shaft (80) which is arranged in the housing (76) and to which driver elements (34) for transmitting torque to an endless traction means (82), passing partially around the feeder house shaft (80), with conveyor slats (84) fastened thereto are attached, a deflection roller (78) which is arranged in the housing (76) and about which the endless traction means (82) runs,
a first bearing arrangement (48) which is fastened to a first end of the feeder house shaft (80) and is connected to the adjacent region of the housing (76) via first mounting means,
and a second bearing arrangement (92) which is fastened to a second end of the feeder house shaft (80) and is connected to the adjacent region of the housing (76) via second mounting means,
**characterized in that** the bearing arrangements (48, 92) are arranged on the inner side of the housing (76), and **in that** the first bearing arrangement (48) is embodied as a floating bearing that is axially displaceable on the feeder house shaft (80) and is configured such that, when the feeder house shaft (80) is inserted into the housing (76), said floating bearing can be pushed into a position in which it and its mounting means do not impede the installation of the feeder house shaft (80) in the housing (76), and can subsequently be moved into its final position.

2. Feeder house assembly (20) according to Claim 1, wherein the second bearing arrangement (92) is embodied as a fixed bearing.

3. Feeder house assembly (20) according to Claim 1 or 2, wherein the mounting means each comprise two clamping elements (64, 66) which clamp the bearing arrangement (48) between one another.

4. Feeder house assembly (20) according to one of the preceding claims, wherein the mounting means each additionally carry a pot-like sealing element (70) which projects towards the inside from the housing (76) and cooperates with a cylindrical sealing ring (72) which is attached to a mount (46) of the driver elements (34).

5. Feeder house assembly (20) according to one of the preceding claims, wherein the driver elements (34) are cylindrical pins which cooperate with cams (84) that are attached to the inside of the traction means (82) consisting of inherently flexible material, and which are welded to mounts (46), which are in turn welded to the feeder house shaft (80).

6. Feeder house assembly (20) according to one of the preceding claims, wherein the feeder house shaft (80) is assembled from a central hollow shaft (36) and solid-material stubs (38, 40) that are inserted into the end-sides thereof and are welded thereto, and the bearing arrangements (48, 92) are fastened to the stubs (38, 40).

7. Feeder house assembly (20) according to Claim 6, wherein one of the stubs (38) passes through an opening (62) in the housing (76) and, on the outside of the housing (76), is connected to a drive.

8. Feeder house assembly (20) according to one of the preceding claims, wherein the floating bearing comprises a first screw (60) that is insertable into the first bearing arrangement (48) and engages in an axial groove (56) of the feeder house shaft (80).

9. Combine harvester (10) having a feeder house assembly (20) according to one of the preceding claims.

## Revendications

1. Assemblage de convoyeur incliné (20) pour une moissonneuse-batteuse (10), comprenant :
un carter (76),
un arbre de convoyeur incliné (80) disposé dans le carter (76), pouvant être entraîné, et sur lequel des éléments d'entraînement (34) sont montés pour la transmission de couple à un moyen de traction sans fin (82) contournant partiellement l'arbre de convoyeur incliné (80) et doté de lattes de transport (84) fixées à celui-ci,
un rouleau de renvoi (78) disposé dans le carter (76) et autour duquel circule le moyen de traction sans fin (82),
un premier ensemble de paliers (48) fixé à une première extrémité de l'arbre de convoyeur incliné (80) et qui est relié par des premiers moyens d'attache à la zone voisine du carter (76),
et un deuxième ensemble de paliers (92) fixé à une deuxième extrémité de l'arbre de convoyeur incliné (80) et qui est relié par des deuxièmes moyens d'attache à la zone voisine du carter (76),
**caractérisé en ce que** les ensembles de paliers (48, 92) sont disposés sur la face intérieure du carter (76), et
**en ce que** le premier ensemble de paliers (48) est configuré sous la forme d'un palier libre axialement coulissant sur l'arbre de convoyeur incliné (80) et est réalisé de telle sorte que lorsque l'arbre de convoyeur incliné (80) est inséré dans le carter (76), il peut être poussé dans une position dans laquelle celui-ci ainsi que ses moyens d'attache ne gênent pas l'installation de l'arbre de convoyeur incliné (80) dans le carter (76), et peut ensuite être amené dans sa position définitive.

2. Assemblage de convoyeur incliné (20) selon la revendication 1, dans lequel le deuxième ensemble de paliers (92) est réalisé sous la forme d'un palier fixe.

3. Assemblage de convoyeur incliné (20) selon la revendication 1 ou 2, dans lequel les moyens d'attache comprennent respectivement deux éléments de serrage (64, 66) qui serrent l'ensemble de paliers (48) entre eux.

4. Assemblage de convoyeur incliné (20) selon l'une quelconque des revendications précédentes, dans lequel les moyens d'attache portent en outre chacun un élément d'étanchéité (70) en forme de pot qui fait saillie vers l'intérieur à partir du carter (76) et coopère avec une bague d'étanchéité cylindrique (72) qui est montée sur une attache (46) des éléments d'entraînement (34).

5. Assemblage de convoyeur incliné (20) selon l'une quelconque des revendications précédentes, dans lequel les éléments d'entraînement (34) sont des tiges cylindriques qui coopèrent avec des cames (84) montées côté intérieur sur les moyens de traction (82) composés d'un matériau souple en soi et qui sont soudées sur les attaches (46) qui sont à leur tour soudées sur l'arbre de convoyeur incliné (80).

6. Assemblage de convoyeur incliné (20) selon l'une quelconque des revendications précédentes, dans lequel l'arbre de convoyeur incliné (80) est composé d'un arbre creux central (36) et de bouts d'arbre (38, 40) en matériau plein, insérés dans celui-ci côté extrémité et soudés sur celui-ci, et les ensembles de paliers (48, 92) sont fixés aux bouts d'arbre (38, 40).

7. Assemblage de convoyeur incliné (20) selon la revendication 6, dans lequel le bout d'arbre (38) traverse une ouverture (62) dans le carter (76) et est relié à un entraînement à l'extérieur du carter (76).

8. Assemblage de convoyeur incliné (20) selon l'une quelconque des revendications précédentes, dans lequel le palier libre comprend une vis (60) pouvant être insérée dans le premier ensemble de paliers (48) qui vient en prise dans une rainure axiale (56) de l'arbre de convoyeur incliné (80).

9. Moissonneuse-batteuse (10) comprenant un assemblage de convoyeur incliné (20) selon l'une quelconque des revendications précédentes.
